Europäisches Patentamt

**European Patent Office**

**Office européen des brevets**

(19)

(11) Publication number: **0 050 929**

**A1**

(12)

# EUROPEAN PATENT APPLICATION

(21) Application number: **81304661.2**

(22) Date of filing: **07.10.81**

(51) Int. Cl.³: **B 62 D 1/18**

(30) Priority: **29.10.80 GB 8034733**

(43) Date of publication of application:
**05.05.82 Bulletin 82/18**

(84) Designated Contracting States:
**AT BE CH DE FR GB IT LI LU NL SE**

(71) Applicant: **Hermes APV Limited**
**6 Lakeside Drive Copsem Lane**
**Esher Surrey(GB)**

(72) Inventor: **Luck-Hille, Peter Malcolm**
**6 Lakeside Drive Copsem Lane**
**Esher Surrey(GB)**

(72) Inventor: **Humberstone, Christopher**
**47 Brewery Road**
**Horsell Woking(GB)**

(74) Representative: **Rackham, Stephen Neil et al,**
**GILL JENNINGS & EVERY**
**53/64 Chancery Lane London WC2A 1HN(GB)**

(54) **Improvements relating to vehicles.**

(57) A vehicle includes a steering wheel 7 connected to one end of a steering column which is also connected to a steering actuating device 11 located centrally transverse of the vehicle and means to locate the steering wheel at either side of the vehicle to enable the vehicle to be steered by a driver located at its right or left hand side. The steering column includes a parallelogram linkage (1, 2, 3, 4,). Preferably the vehicle includes a pedal set with an accelerator (45) and a brake pedal (41), mounted on and axially movable along a shaft (35) extending transversely across the vehicle, and means (48,49) to locate the pedals at the right or left of the vehicle. Preferably the instrumentation of the vehicle is carried by the one end of the steering column and so moves with the steering wheel (7) from one side of the vehicle to the other and retains the same orientation and occupies the same relative position with respect to the driver at both sides of the vehicle.

Fig.1.

Hermes APV Limited                    GJE    880/148

- 1 -

## IMPROVEMENTS RELATING TO VEHICLES

Vehicles in the United Kingdom and some other countries drive on the left hand side of roads and consequently the driving controls of the vehicle are mounted on the right hand side of the vehicle. In many other countries vehicles drive on the right hand side of the road and consequently the driving controls are mounted on the left hand side of the vehicle. Thus vehicles normally produced for use in a particular country are produced with their driving controls all mounted on whichever side of the car suits the country of manufacture. If it is then desired to export vehicles made in one country to another country where they drive on the other side of the road it is necessary to modify the vehicles that are to be exported to fit them with driving controls on the opposite side from those in normal production.

In addition to this general rule, specialised vehicles such as road sweeping vehicles are manufactured which have duplicated and interconnected sets of driving controls one located on each side of the vehicle.

Various attempts and proposals have previously been made to move the steering wheel of the vehicle so that it can be operated by a driver located at the right or left hand side of the vehicle. An early one of these is described in United States of America Patent Specification No 2 436 153. The arrangement shown in this specification includes a steering wheel connected to the top end of a rigid steering column the bottom end of which is  pivotally connected to a steering control box. This arrangement enables the top end of the steering column and the steering wheel to be moved from side to side but during this movement the attitude of the steering wheel changes since it is always normal to the steering column.

British Patent Specification No 775 534 describes a system in which the steering assembly is slidably mounted on a pair of rails extending across the vehicle and is capable of being moved from one side of the vehicle to the other. Movement of the steering wheel is transmitted from a movable steering assembly to a centrally mounted steering device by a pair of crank arms joined together by a pivoted link. In this arrangement the attitude of the steering wheel remains constant as the steering wheel is moved from one side to the other.

British Patent Specification No 883130 describes a system where the steering wheel is supported on a member pivotable about a horizontal axis extending fore and aft the vehicle. In this case, as the steering wheel is moved from one side of the vehicle to the other, the attitude of the steering wheel remains constant. The instrumentation of the vehicle is located in a central binnacle.

Finally, British Patent Specification No 1 082 380 describes an arrangement in which the steering column is cranked with one end of the column located centrally and with the other end carrying the steering wheel and being located at one side or the other of the vehicle. The column is rotated around the central portion to move the steering wheel from the one side of the vehicle to the other.

It is desirable for all the vehicle controls and instrumentation to have the same relative position to the driver irrespective of the side of the vehicle at which the driver is located. None of the arrangements discussed above provide this.

According to this invention a vehicle including a steering mechanism having a steering wheel connected to one end of the steering column, a steering actuating device connected to the other end of the steering column, the other end of the steering column being located centrally transverse of the vehicle and means to locate the one end of the steering column and the steering wheel to the right hand side or to the left hand side of the vehicle to enable the vehicle to be steered by a driver located at its right hand or left hand side is characterised in that the steering column includes a parallelogram linkage arranged so that the one end of the steering column is movable from side to side of the vehicle.

Preferably the vehicle also includes a pedal set having at least an accelerator and a brake pedal, the pedal set being mounted on and axially movable along a shaft extending transversely across the vehicle, and means to locate the pedal set at the right hand side or at the left hand side of the vehicle, to enable the pedal set to be operated by a driver located at the right hand side or the left hand side of the vehicle.

Preferably the instrumentation of the vehicle such as the speedometer, odometer and tachometer are carried by the one end of the steering column and so move with the steering wheel from one side of the vehicle to the other and retain the same orientation and occupy the same relative position at both sides of the vehicle.

The instrumentation may be housed in a binnacle attached to the one end of the steering column but preferably the instrumentation is located in the hub of the steering wheel.

Preferably the vehicle includes a pivoted arm one end of which is pivotally connected to the steering column and the other end of which is connected to a toothed quadrant and an electric motor driving a worm gear meshing with the toothed quadrant. The means to locate the pedal set preferably includes a leadscrew driven by an electric motor and preferably the two electric motors are controlled by a common control circuit so that they are interlocked and so that both the one end of the steering column and the pedal set are always both on the same side of the vehicle.

Preferably stops define the locations of the steering column and pedal set at opposite sides of the vehicle. The stops may be formed by electrical contact switches which sense the position of the steering column and pedal set and deactivate their respective motors when they reach their predetermined positions.

Both the steering column and the pedal set may be moved manually and, in this case, the means to locate the one end of the steering column and the means to locate the pedal set may each include a manually releasable latch to retain the one end of the steering column and the pedal set in position at one side of the vehicle but to enable the one end of the steering column and the pedal set to be released and manually moved across the other side of the vehicle.

Further vehicle controls such as electrical switches, a hand or parking brake and a transmission control lever may also be mounted on the steering column and so be moved from one side of the vehicle to the other together with the steering wheel.

Preferably the steering column is arranged with two longer parallel links of a parallelogram linkage pivotally connected to the body of the vehicle which forms one of the shorter links and with the fourth link of the parallel linkage pivotally connected to the one end of the longer parallel links. The steering wheel is preferably connected to the steering shaft which is journalled into the fourth link of the parallelogram linkage and the shaft includes a pair of universal joints located substantially in planes containing the pivots of the parallelogram linkage. The steering actuating device connected to the other end of the steering column is also connected to the other end of the steering shaft and may be a conventional rack and pinion steering box or simply a gearbox feeding a subsequent steering box located downstream. Preferably one of the longer parallel links is constructed as a substantial member providing the principal physical structure of the steering column and the other of the longer parallel links is formed by a rod. In this case the rod preferably includes a length adjuster.

The shaft extending transversely across the vehicle and supporting the pedal set may be mounted for rotary movement with the brake pedal being connected to the shaft so that depression of the pedal causes rotation of the shaft, a brake actuating device being connected to an end of the shaft. The connection between the brake pedal and the shaft is preferably splined so that the pedal can slide axially along the shaft but depression of the brake pedal causes rotation of the shaft about its axis.

Alternatively, both or all of the pedals may be simply journalled into the transverse shaft and connected to their controls by flexible connections such as Bowden cables or flexible hydraulic lines. A further arrangement particularly for the accelerator pedal is for the or each pedal to include a projection extending forwards of the vehicle which, upon depression of the or each pedal passes through an aperture in the scuttle to actuate an auxiliary control plate connected to a throttle control.

Thus, with the arrangement of the vehicle in accordance with this invention the attitude of the steering wheel is the same on both sides of the vehicle as a result of using a parallelogram linkage in the steering column. Also, in a preferred arrangement in which the instrumentation is carried by the one end of the steering column this results in a constant relative position in respect to the driver at both sides of the vehicle. Also, the various other driving controls have the same relative position to the driver irrespective of side. This is a great advantage because all the controls of instruments are always in the same relative position which ensures that the driver will not get confused in an emergency.

An example of a vehicle in accordance with this invention will now be described with reference to the accompanying drawings; in which:-

Figure 1 is a diagram illustrating the operation of a steering column;

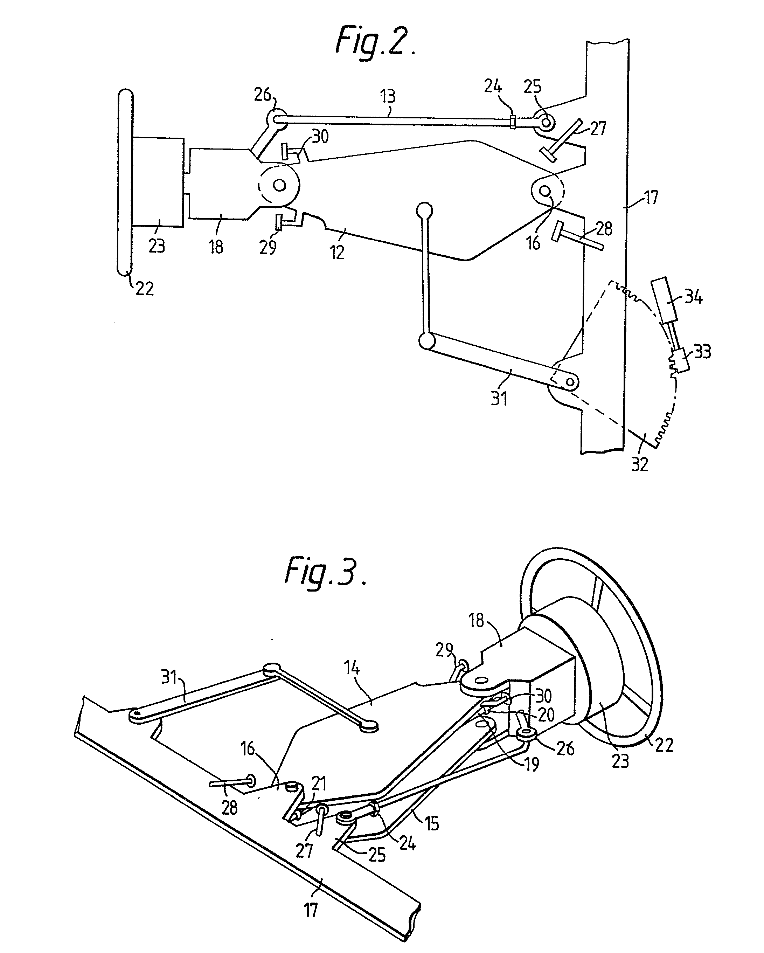

Figure 2 is a plan of a steering column in a central position;

Figure 3 is a perspective view of the steering column again in its central position;

Figure 4 is a plan of the steering column arranged in position on the right hand side of the vehicle;

Figure 5 is a plan of the steering column arranged in position at the left hand side of the vehicle;

Figure 6 is a diagram of a pedal set and its mountings;

Figure 7 is a partly sectioned elevation of a pedal set; and,

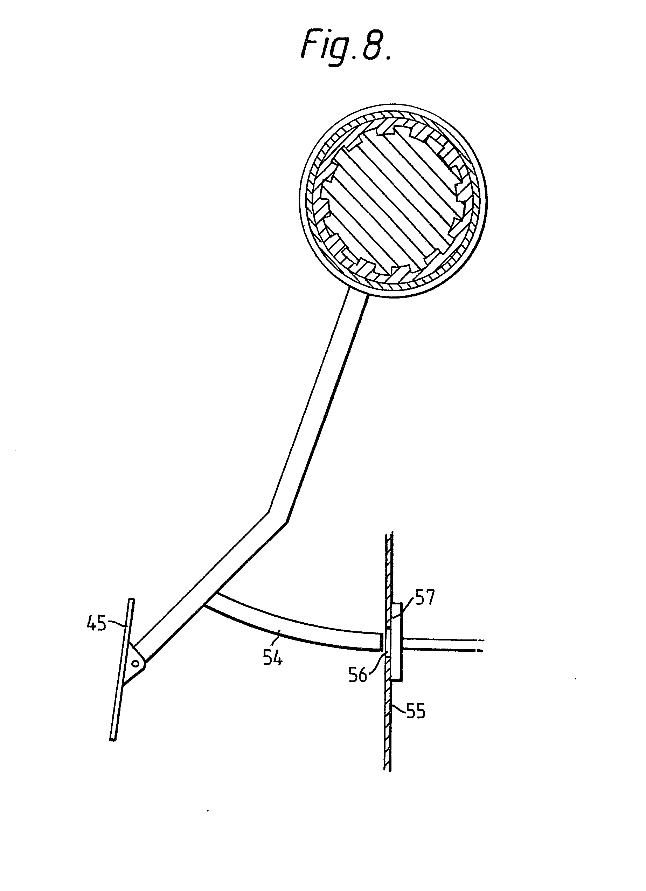

Figure 8 is an end elevation of a modification of a pedal set.

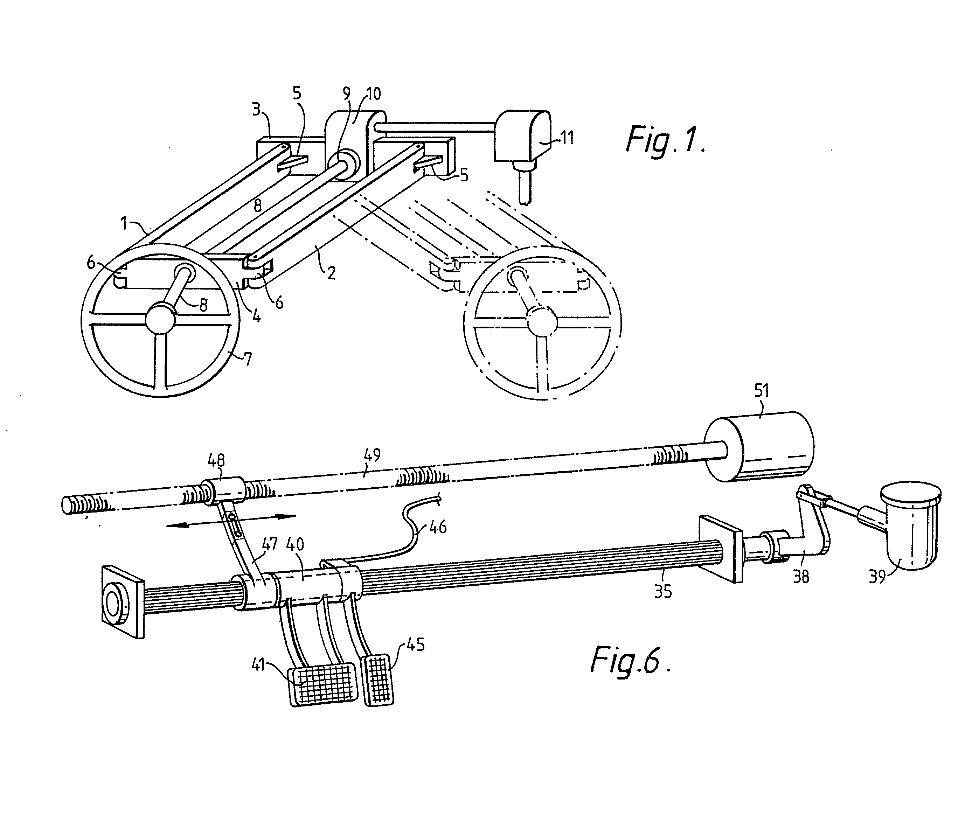

The vehicle includes a steering column as illustrated diagrammatically in Figure 1 comprising a parallelogram linkage formed by two parallel links 1 and 2, a lower cross member 3 and an upper cross member 4. The links 1 and 2 have bifurcated ends and the lowermost ends of the links 1 and 2 are pivotally connected to trunions 5 forming part of the lower cross member 3 whilst the upper bifurcated ends are pivotally connected to tongues 6 forming the ends of the upper cross member 4. Thus, the parallelogram

0050929

- 7 -

linkage is substantially rigid in the up and down direction but is capable of pivoting to move the upper cross member 4 from side to side. The lower cross member 3 is fixed rigidly substantially on the centre line of the vehicle and the length of the links 1 and 2 are arranged such that the upper cross member 4 can be positioned at the right hand side or the left hand side of the vehicle.

The steering wheel 7 is connected to a steering shaft 8 which is journalled into the upper cross member 4. The steering shaft 8 includes a pair of universal joints 9 (only one of which is shown) but which are located adjacent the lower crossmember 3 and upper crossmember 4. Thus, the steering shaft 8 between the steering wheel 7 and the upper cross member 4 is always normal to the upper cross member 4 but the two universal joints and the steering shaft 8 enable the steering shaft 8 to accommodate the pivotal movement of the steering column. The lower end of the steering shaft 8 leads into a gearbox 10 mounted on the lower cross member 3 and the drive imparted to the steering shaft 8 is transmitted by the gearbox 10 to a further gearbox 11 and thence to a steering actuating device such as a rack and pinion mechanism (not shown).

In a practical embodiment of this invention the steering column is different in that the parallelogram linkage in the steering column includes one substantial member 12 and the simple rod 13. The substantial member 12 is preferably formed by a pair of opposed plates 14 and 15, both of which are pivotally connected at one of their ends to trunions 16 connected to a main frame member 17 of the vehicle and at their other ends connected to an upper member 18 which includes a bearing (not shown) supporting a steering shaft 19. The steering shaft 19 includes two universal joints 20 and 21 located adjacent the pivotal connection between the plates 14 and 15 and the trunions 16 and upper member 18 and a steering wheel 22 is connected to one end of the steering shaft 19. The upper member 18 may support the instrumentation of the vehicle (not shown) which may be housed in a binnacle mounted on the upper member 19 . Preferably, the steering wheel 22 includes a hub 23 and the instrumentation is located in the hub 23. The rod 14 includes a length adjuster 24 and is connected between a trunion 25 connected to a frame member 17 and an arm 26 connected to the upper member 18.

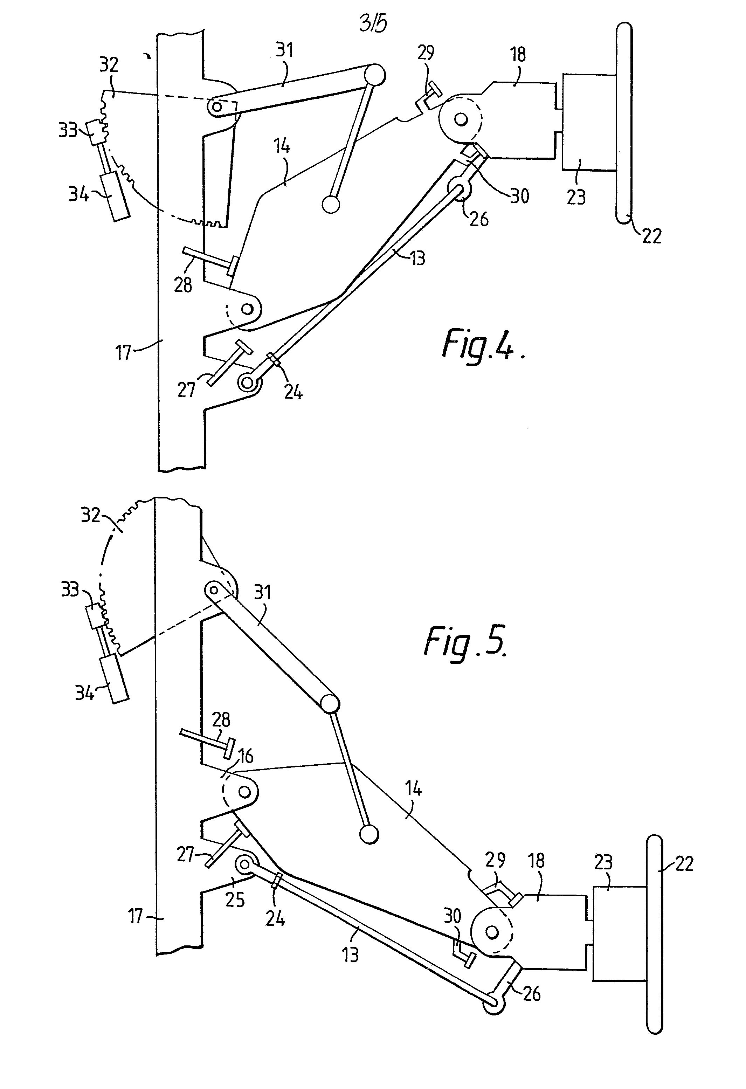

Stops 27 and 28 are connected to the frame member 17 and further stops 29 and 30 are connected to the plate 14. A pivoted arm 31 is connected to the plate 14 and also to a toothed quadrant 32. The toothed quadrant 32 meshes with a worm gear connected to a reversible electric motor 34. Actuation of the electric motor 34 causes rotation of a pivoted arm 31 and pivoting movement of the steering column from one side of the vehicle to the other. Figure 4 shows the steering mechanism in position at the right hand side of the vehicle and in this position a plate 14 engages the stop 28 and the stop 30 engages the upper member 18 to limit further movement to the right of the steering mechanism whilst the pivoted arm 31 together with the toothed quadrant 32 and worm gear 33 prevent movement of the steering mechanism to the left of the vehicle. Thus, the arm 31 together with the stops 28 and 30 lock the steering mechanism into position at the righthand side of the vehicle. Similarly, when the electric motor 34 is actuated to move the steering column over to the left hand side of the vehicle as shown in Figure 5 the stops 27 and 29 together with the pivoted arm 31 locks the steering mechanism into position at the left hand side of the vehicle. The length adjuster 24 on the rod 13 is used in the initial setting up of the parallelogram linkage and may be used to adjust the attitude of the steering wheel 22.

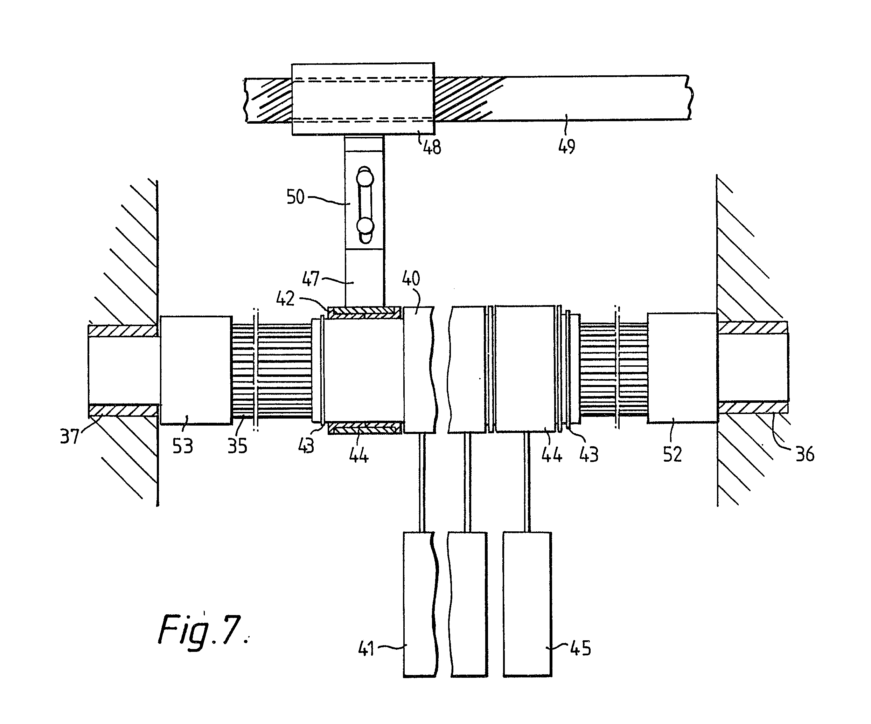

The control pedals for the vehicle may also have to be changed from one side of the vehicle to the other with the steering wheel 22 and the arrangement for doing this is shown in Figures 6 and 7. The splined shaft 35 is mounted transversely across the vehicle for rotation about its axis in bearings 36 and 37. A crank arm 38 is connected to the end of the splined shaft 35 and to a brake master cylinder and reservoir unit 39. An internally splined sleeve 40 is mounted on the splined shaft 35 and arranged so that it can move axially along the splined shaft 35 but so that it rotates with the splined shaft 35. A brake pedal 41 is rigidly fixed to the internally splined sleeve 40 so that, upon depression of the brake pedal 41 the splined sleeve 40 rotates and with it, the splined shaft 35, so actuating the brake master cylinder 39 to the crank arm 38.

A reduced diameter portion is provided at both ends of an internally splined sleeve 40. Journal bearings are mounted on a reduced diameter portions at both ends of the internally splined sleeve 40 and the construction of both journal bearings is identical. They both comprise a pair of shoulder bearing rings 42 which are retained in position by a circlip 43. Annular bearing elements 44 ride on the bearing rings 42 so that they are free to rotate with respect to the bearing rings 42 and, in turn, with respect to the internally splined sleeve 40 and the splined shaft 35. An accelerator pedal 45 is welded onto one annular bearing element 44 and the right hand end of the internally splined sleeve 40. A Bowden cable 46 is connected to the accelerator pedal 45 to transmit the movement of the accelerator pedal 45 to the engine of the vehicle. A connecting rod 47 is welded onto the bearing elements 44 at the left hand end of the internally splined sleeve 40. The connecting rod 47 is connected to a nut 48 mounted on a leadscrew 49 which, is also mounted transversely

across the vehicle parallel to the splined shaft 35. The connecting rod 47 includes a pin and slot connection so as to allow its length to vary to accommodate any misalignment between the splined shaft 35 and the leadscrew 49. The leadscrew 49 is driven by a reversible electric motor 51 and, upon rotation of the leadscrew 49 by the reversible electric motor 51 the nut 48 is caused to move along the leadscrew 49. This causes the internally splined sleeve 40 to move along the splined shaft 35. Stops 52 and 53 define the limit positions of the sleeve 40 along the shaft 35. Preferably the controls of the electric motor 51 and 34 are interlocked so that they are both operated together.

In a modification, the accelerator pedal 45 includes a forwardly extending projection 54. In this case the scuttle 55 of the vehicle includes apertures 56 on both sides of the vehicle and auxiliary control plates 57 located behind the apertures 56. This actuation of the accelerator pedal 45 causes the projection 54 to move through the aperture 56 and engage and acuate the control plate 57. The plates 57 are then coupled to the engine of the vehicle.

C L A I M S

1.      A vehicle including a steering mechanism having a steering wheel 7 connected to one end of the steering column, a steering actuating device 11 connected to the other end of the steering column, the other end of the steering column being located centrally transverse of the vehicle and means to locate the one end of the steering column and the steering wheel to the right hand side or to the left hand side of the vehicle to enable the vehicle to be steered by a driver located at its right hand or left hand side, characterised in that the steering column includes a parallelogram linkage 1, 2, 3, 4, arranged so that the one end of the steering column is movable from side to side of the vehicle.

2.      A vehicle according to claim 1, further characterised in that the vehicle includes a pedal set having at least an accelerator 45 and a brake pedal 41, the pedal set being mounted on and axially movable along the shaft 35 extending transversely across the vehicle, and means 48, 49 to locate the pedals at the right hand side or at the left hand side of the vehicle to enable the pedal set to be operated by a driver located at the right hand side ore the left hand side of the vehicle.

3.      A vehicle according to claim 1 or 2, further characterised in that instrumentation of the vehicle such as the speedometer, odometer and tachometer are carried by the one end of the steering column 23 and so move with the steering wheel from one side of the vehicle to the other and retain the same orientation and occupy the same relative position with respect to the driver at both sides of the vehicle.

4.      A vehicle according to claim 3, further charactereised in that the instrumentation is located in the hub of the steering wheel 22.

5.      A vehicle according to claim 2, or claims 3 or 4 when dependent upon claim 2, which includes a pivoted

0050929

- 12 -

arm 31 one end of which is pivotally connected to the steering column and the otherend of which is connected to a toothed quadrant 32 and an electric motor 34 driving a worm gear 33 meshing with the toothed quadrant 32 in which the means to locate the pedal set includes a leadscrew 49 driven by an electric motor 51 and in which the two electric motors 32 and 51 are controlled by a common control circuit so that they are interlocked and so that both the one end of the steering column and the pedal set are always both on the same side of the vehicle.

6.      A vehicle according to claim 5, further characterised in that stops 27, 28, 52, 53 are provided to define locations of the one end of the steering column and the pedal set at both sides of the vehicle.

7.      A vehicle according to any one of the preceding claims, in which further vehicle controls such as electrical switches, a hand or parking brake, and a transmission control lever are also mounted on the steering column and so are also moved from one side of the vehicle to the other together with the steering wheel 22.

8.      A vehicle according to any one of the preceding claims in which the steering column is arranged with two longer parallel links 1, 2 of the parallelogram linkage pivotally connected to the body of the vehicle 3 which forms one of the shorter parallel links and with the first link 4 of the parallelogram linkage pivotally connected to the one end of the longer parallel links, the steering wheel 7 being connected to the steering shaft which is journalled into the fourth link and which includes a pair of universal joints 9 located substantially in planes containing the pivots of the parallelogram linkage.

9.      A vehicle according to claim 8, further characterised in that one of the longer parallel links is

0050929

- 13 -

constructed as a substantial member 12 providing the principal structure of the steering column and the otherlonger parallel link is formed by a rod 13.

10. A vehicle according to claim 9, further characterised in that the rod includes a length adjuster 24.

Fig.1.

Fig.6.

1/5

0050929

## Fig.2.

## Fig.3.

0050929

3/5

Fig.4.

Fig.5.

Fig.7.

0050929

Fig.8.

45

54

56

57

55

European Patent Office

**EUROPEAN SEARCH REPORT**

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | B 62 D 1/18 |
| D/Y | GB - A - 775 534 (ZOCCHI) <br><br> * claim; page 2, lines 94-97 * | 1,2,7 | |
| Y | FR - A - 2 135 568 (CATERPILLAR) <br><br> * claim; figures 1-5 * | 1 | |
| A | GB - A - 771 706 (DAIMLER-BENZ) | | |
| D | GB - A - 883 130 (RENAULT) | | |
| D | GB - A - 1 082 280 (FORD) | | TECHNICAL FIELDS SEARCHED (Int.Cl. ³) |
| D | US - A - 2 436 153 (SANMORI) | | B 62 D <br> B 60 K |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 02.02.1982 | PIRIOU |

EPO Form 1503.1  06.78